# EUROPÄISCHE PATENTSCHRIFT

(11) **EP 2 619 454 B1**
(45) Veröffentlichungstag und Bekanntmachung des Hinweises auf die Patenterteilung: **12.04.2017**
(21) Anmeldenummer: 11761333.1
(22) Anmeldetag: 20.09.2011
(51) Int. Cl.: F03D 80/00, H01R 4/50, H01R 13/622, H01R 101/00, H02G 15/00, F03D 80/80

(54) **ELEKTRISCHES VERBINDUNGSSYSTEM EINER ENERGIEGEWINNUNGSEINRICHTUNG**
ELECTRICAL CONNECTION SYSTEM FOR AN ENERGY GENERATION DEVICE
SYSTÈME DE CONNEXION ÉLECTRIQUE D'UN DISPOSITIF DE PRODUCTION D'ÉNERGIE

(30) Priorität: 21.09.2010 DE 102010045921
(43) Veröffentlichungstag der Anmeldung: 31.07.2013
(73) Patentinhaber: Auto-Kabel Management GmbH, 79688 Hausen i.W. (DE)
(72) Erfinder: GOTTSCHLICH, Heinz-Georg, 41812 Erkelenz (DE); SCHLOMS, Martin, 52070 Aachen (DE); LIETZ, Franz-Josef, 46049 Oberhausen-Lirich (DE)
(74) Vertreter: Cohausz & Florack
(86) Internationale Anmeldenummer: PCT/EP2011/066268
(87) Internationale Veröffentlichungsnummer: WO 2012/048992

(56) Entgegenhaltungen:
- EP-A2- 1 032 077
- CH-A- 217 595
- DE-B3- 10 324 794
- US-A- 2 308 811
- US-A- 4 752 252
- US-A- 5 409 403
- US-A1- 2006 199 411

## Beschreibung

Der Gegenstand betrifft ein elektrisches Verbindungssystem einer Energiegewinnungseinrichtung mit einem an einem Ende eines ersten Kabels angeordneten ersten Verbindungsstück, und einem an einem Ende eines zweiten Kabels angeordneten, zu dem ersten Verbindungsstück komplementären zweiten Verbindungsstück. Der Gegenstand betrifft des Weiteren ein 10 Verfahren zum Verbinden von Kabeln in elektrischen Verbindungssystemen von Energiegewinnungseinrichtungen. Elektrische Energiegewinnungseinrichtungen, wie beispielsweise, Windkraftanlagen, werden heutzutage mit Kupfer- oder Aluminiumkabeln bestückt. Aufgrund des steigenden Kupferpreises setzt sich jedoch die Bestückung mit Aluminiumkabeln immer mehr durch. Insbesondere bei Windkrafträdern, die zwischen 50m und 150m hoch sind, werden große Mengen Kabel benötigt, so dass das Einsparpotential von Aluminiumkabel erheblich ist.

Durch die große Höhe der Windkraftanlagen bedingt, ist es jedoch unmöglich, die im Turm der Windkraftanlage angeordneten Generatoren mit einem einzigen Kabel mit dem im Sockel der Anlage angeordneten Umrichter zu verbinden. Daher werden in einzelne Turmsegmenten jeweils Kabel vormontiert. Um die Kabel der einzelnen Segmente miteinander zu verbinden, müssen diese an den Segmentgrenzen elektrisch leitend verschraubt oder vercrimpt werden. Ein solches Verbindungssystem ist in US 2,308,811 offenbart. Solange Kupferkabel zum Einsatz kommen, ist ein Vercrimpen oder Verschrauben der Kabel unproblematisch, da sich auf der Kupferoberfläche kein die elektrische Leitfähigkeit negativ beeinflussendes Material ablagert, was während des Dauer des Betriebes der Windkraftanlage zu einer Verminderung der elektrischen Leitfähigkeit der Verbindung führen kann. Bei der Verwendung von Aluminiumkabeln ist dies jedoch anders. Eine Crimpverbindung muss vor Umwelteinflüssen geschützt werden. Ferner muss verhindert werden, dass sich an den Übergangsstellen Aluminiumoxid bildet, welches den Übergangswiderstand erheblich erhöht. Bei Kabeln, die mehrere 10 A oder sogar mehreren 100 A tragen, ist ein elektrischer Übergangswiderstand stets mit hoher Verlustleistung verbunden. Daher muss versucht werden, den elektrischen Übergangswiderstand zwischen den Kabeln an der Verbindungsstelle so gering wie möglich zu gestalten.

Heutzutage wird daher an den Sektionsgrenzen ein Vercrimpen der Kabel der jeweiligen Sektionen vorgeschlagen. Hierbei wird eine Crimphülse auf die Kabel aufgeschraubt. Hierzu muss der Mechaniker in den Turm klettern, an der Sektionsgrenze die Kabel ablängen und abisolieren. Anschließend muss der Mechaniker die abisolierten Enden der Kabel mit einer Leitpaste bestreichen. Hierdurch soll verhindert werden, dass sich an den Oberflächen der Aluminiumlitzen Aluminiumoxid bildet. Anschließend muss der Mechaniker die Crimphülse auf die freien Kabelenden aufschieben und in einem aufwendigen Prozess mit vielen Schrauben mit den Kabeln verschrauben. Die so geschilderte Montage ist zeit- und kostenintensiv. Außerdem ist die Güte der elektrischen Verbindung nicht stabil, dass heißt, dass über die Zeit der elektrische

Übergangswiderstand steigt, da die Leitpaste nicht vollständig die Bildung von Aluminiumoxid verhindern kann.

Aus diesem Grunde lag dem Gegenstand die Aufgabe zugrunde, ein elektrisches Verbindungssystem einer Energiegewinnungseinrichtung zur Verfügung zu stellen, welches in besonders einfacher Weise montierbar ist.

Diese Aufgabe wird gegenständlich durch ein Verbindungssystem nach Anspruch 1 gelöst.

Es ist erkannt worden, dass das Vercrimpen und Verschrauben der Aluminiumkabel fehlerträchtig ist und keinen genügend kleinen Übergangswiderstand realisieren lässt. Auch ist erkannt worden, dass das bekannte Montageverfahren zu zeitaufwendig ist. Daher wird vorgeschlagen, dass die jeweiligen Kabelenden mit einer Aufnahme und einem korrespondierenden Bolzen versehen sind, die ineinandersteckbar sind. Der Bolzen ist so gebildet, dass er selbsthemmend in der Aufnahme anordenbar ist.

Selbsthemmung kann dahingehend verstanden werden, dass die Haftreibung des Bolzens in der Aufnahme einen Widerstand gegen ein axiales Verrutschen oder ein Verdrehen des Bolzens in der Aufnahme bewirkt. Hierbei wird der Neigungswinkel als auch die Oberflächenrauhigkeit des Bolzens als auch der Aufnahme so variiert, dass die Selbsthemmung so groß ist, dass die axial wirkende Zugkraft der Kabel aufgenommen wird. Insbesondere bei Windkraftanlagen kann eine Verbindung zwischen Kabeln an einer Sektionsgrenze erfolgen. Ein in einer Sektion vorkonfektioniertes Kabel kann so gestaltet sein, dass es an der Sektionsgrenze mit dem gegenständlichen Bolzen versehen ist und ein gegenüberliegendes Kabel der anderen Sektion mit der gegenständlichen Aufnahme. Der Mechaniker muss dann lediglich den Bolzen in die Aufnahme schieben, so dass die Kabel elektrisch als auch mechanisch miteinander verbunden sind. Die Selbsthemmung des Bolzens in der Aufnahme bewirkt, dass die ineinander gesteckten Kabel aufgrund ihrer eigenen Gewichtskraft nicht mehr voneinander getrennt werden. Das heißt, dass die gegenständliche Verbindung kraftschlüssig ist, wobei die Haltekraft größer ist, als die durch die Gewichtskraft der Kabel bedingte Zugkraft. Die Gewichtskraft durch das Gewicht des Kabel von der Sektionsgrenze bis zu seinem ersten Befestigungspunkt innerhalb der Sektion sein. Dieses Gewicht des Kabelabschnitts übt eine Zugkraft auf die Steckverbindung zwischen Aufnahme und Bolzen aus.

Auch ist es möglich, dass die vorkonfektionierten Kabel in den jeweiligen Sektionen kurz vor der Sektionsgrenze abgelängt und entweder mit einer Aufnahme oder einem Bolzen versehen sind. Dann kann die Sektionsgrenze mit einem Verbindungskabel überbrückt werden, welches jeweils zu dem an den Sektionsgrenzen vorkonfektionierten Kabel komplementäre Verbindungsstücke aufweist. Der Mechaniker muss dann lediglich das Verbindungskabel in die Aufnahme oder den Bolzen der jeweiligen Kabelenden der vorkonfektionierten Kabel einschieben und erhält somit eine mechanische und elektrische Verbindung der Kabel untereinander.

Gemäß einem vorteilhaften Ausführungsbeispiel wird auch vorgeschlagen, dass das zweite Verbindungsstück ein in der Aufnahme selbstgehemmter Konus ist, wobei insbesondere die Aufnahme in Einschubrichtung des Konus sich verjüngt. Der Konus ist vorzugsweise ein zylindrischer Konus, dessen Neigungswinkel so gestaltet ist, dass er selbsthemmend in der Aufnahme angeordnet ist. Die Aufnahme ist vorzugsweise ein zu dem Konus komplementärer Zylinder.

Dadurch, dass die Aufnahme als Konus gebildet ist, ist die Winkellage der Kabel zueinander ohne Bedeutung, was die Montage der Kabel erleichtert. Der Mechaniker muss lediglich den Konus ist die Aufnahme einschieben und festdrücken. Die Kabel sind danach mechanisch und elektrisch miteinander verbunden.

Der Durchmesser der Verbindungsstücke kann in etwa dem Kabeldurchmesser entsprechen. Es ist jedoch auch möglich, dass bei einem mehrphasigen Verbindungssystem jede Phase mit Verbindungsstücken mit unterschiedlichen Durchmessern oder unterschiedlichen Formen ausgestattet ist. So kann beispielsweise bei einem 3-Phasensystem jeder Phase ein Bolzen, Aufnahme-Paar mit unterschiedlichen Durchmessern zugewiesen sein. Insbesondere bei Windkraftanlagen werden pro Phase drei bis sieben Kabel verwendet, so dass neun bis 21 Kabel pro Sektion vorkonfektioniert sind. Diese Kabel müssen phasenrichtig mit den jeweiligen Kabeln der anderen Sektionen verbunden werden. Um eine Fehlverbindung zu vermeiden, kann jede Phase mit einem eigenen Paar aus Verbindungsstücken ausgestattet sein, wobei die Verbindungsstücke der einzelnen Phasen untereinander nicht komplementär sind und nicht zueinander passen. Der Mechaniker kann dann die Montage durchführen, ohne zu befürchten, dass er eine phasenunrichtige Verbindung herstellt. Es ist sichergestellt, dass die zueinander gehörenden Kabel auch elektrisch miteinander kontaktiert werden.

Bei der Verwendung von Aluminiumkabeln ist zu bevorzugen, dass die Verbindungsstücke ebenfalls aus Aluminium gebildet sind. Dies hat den Vorteil, dass keine Übergangswiderstände oder Kontaktkorrosion an den Übergängen zwischen den Kabeln und den Verbindungsstücken entsteht. Um zu verhindern, dass sich auf der Oberfläche der Verbindungsstücke Aluminiumoxid bildet, wird vorgeschlagen, dass die Oberfläche der Verbindungsstücke verzinnt ist. Auch ist es möglich, dass die Oberfläche zunächst vernickelt und anschließend verzinnt ist. Durch die Unternickelung wird eine dauerhafte Beschichtung erreicht und die Verzinnung ermöglicht die Erzielung eines geringen Kontaktwiderstandes.

Um die Verbindungsstücke sicher mit den Kabeln zu verbinden, wird vorgeschlagen, dass ein abisoliertes Kabelende in einer Hülse angeordnet ist. Die Hülse kann so um die Kabelenden gepresst sein, dass die einzelnen Litzen oder Drähte des abisolierten Kabels fest verpresst sind. Anschließend kann das stirnseitige Ende der Hülse abgeschnitten oder überfräßt werden, so dass die Kabelenden an den stirnseitigen Enden der Hülse enden und frei von Aluminiumoxid sind. Anschließend kann das Verbindungsstück, welches eine dem Kabelende zugewandte Stirnfläche aufweisen kann, mit der Hülse und dem Kabelende entlang der Stirnfläche verschweißt werden. Hierbei kann beispielsweise ein Reibschweißen, insbesondere ein Rotationsreibschweißen angewandt werden. Auch ist es möglich, dass ein Ultraschalschweißen oder ein Widerstandsschweißen verwendet wird, um die Verbindungsstücke mit der Hülse und den Kabelenden zu verschweißen.

Um eine sortenreine Verbindung herzustellen, wird auch vorgeschlagen, dass auch die Hülse aus Aluminium gebildet ist. Hierbei kann auch die Hülse verzinnt und/oder vernickelt sein, wie zuvor beschrieben wurde.

Eine besonders hohe elektrische Leitfähigkeit wird bei der Verwendung von Aluminiumkabeln erreicht, wenn diese eine hohe Reinheit aufweisen. Insbesondere die Verwendung von Al 99,5 hat sich als vorteilhaft erwiesen. Jedoch ist auch die Verwendung von höher- oder geringerwertigem Aluminium möglich.

Um die Montage zu erleichtern, sollten die Aluminiumkabel, die einen großen Kabelquerschnitt aufweisen, möglichst flexibel sein. Aus diesem Grunde wird auch vorgeschlagen, dass die Aluminiumkabel aus weichgeglühtem Aluminium hergestellt werden. Hierdurch lassen sich die Kabel, insbesondere die an den Kabelenden angeordneten Verbindungsstücke, besonders leicht bewegen und somit miteinander verbinden und zusammenschieben.

Um zu verhindern, dass die mechanische Verbindung zwischen den Kabel gelöst wird, wird vorgeschlagen, dass eine Isolationshülse die Verbindungsstücke umgibt. Die Isolationshülse verhindert, dass auf die elektrische Verbindung an den Verbindungsstücken Umwelteinflüsse wirken. Die Isolationshülse kann so ausgestaltet sein, dass sie die elektrische Verbindung an den Verbindungsstücken abdichtet, so dass Feuchtigkeit nicht an die elektrische Verbindung heranlangen kann. Hierzu ist es beispielsweise möglich, dass die Isolationshülse feuchtigkeitsdicht an der Isolation des Kabels im Bereich des Kabelendes anliegt. Dies kann beispielsweise durch die Verwendung eines O-Rings realisiert werden. Auch ist es möglich, dass ein Schrumpfschlauch um die Isolationshülse gelegt wird und an die Isolation des Kabels angeschrumpft wird.

Die Isolationshülse ist zweiteilig geformt. In diesem Fall ist es beispielsweise möglich, dass ein erster Teil der Isolationshülse auf das erste Kabel aufgeschoben wird und anschließend das erste Verbindungsstück an dem ersten Kabel angeordnet wird. Ein zweiter Teil der Isolationshülse kann an dem zweiten Kabel angeordnet werden und anschließend kann an dem zweiten Kabel ebenfalls das Verbindungsstück angeordnet werden. Anschließend können die beiden Teile verliersicher miteinander mechanisch verbunden werden. Dies kann beispielsweise dadurch erfolgen, dass die beiden Teile übereinander geschoben werden und dann mechanisch miteinander verrastet oder verschraubt werden. Dies kann beispielsweise durch ein gegeneinander Verdrehen der beiden Teile erfolgen.

Wenn die beiden Teile mechanisch miteinander verbunden werden, ist es möglich, dass diese eine axiale Druckkraft auf die Verbindungsstücke ausüben, derart, dass die Verbindungsstücke axial aufeinander zu gedrückt werden. Eine solche Kraft kann beispielsweise durch eine in der Isolationshülse vorgesehene Ringschulter ausgeübt werden. Die Ringschulter kann so geformt sein, dass sie beim Verbinden der Teile gegen an den Verbindungsstücken angeordnete, vorzugsweise umlaufende Kragen drückt. Beim mechanischen miteinander verbinden der beiden Teile können diese beispielsweise axial aufeinander zu bewegt werden, was dazu führt, dass die Ringschultern gegen die Kragen drücken und die Verbindungsstücke zusammendrücken. Dies bewirkt eine mechanische Befestigung der Verbindungsstücke miteinander über die Selbsthemmung hinaus.

Sind die beiden Teile der Isolationshülse miteinander verbunden, sind auch die Kabel verliersicher miteinander verbunden. Selbst eine Zugkraft, die auf die Kabel ausgeübt wird, führt nicht zu einem mechanischen Lösen der Verbindungsstücke voneinander. Die Zugkraft würde durch die Isolationshülse, insbesondere über die Kragen und die Ringschultern aufgenommen werden und wirkte nicht auf die Verbindung der Verbindungsstücke.

Wie eingangs bereits erläutert, ist bisher die Montage der einzelnen Kabel an den Sektionsgrenzen zeitaufwendig und kompliziert. Um ein besonders einfaches Montieren zu ermöglichen, muss der Mechaniker mit einem möglicht geringen Werkzeugaufwand die Montage vollziehen können. Um dies zu erreichen, wird auch vorgeschlagen, dass an zumindest einem Teil eine Nutmutter zur Aufnahme eines Hakenschlüssels angeordnet ist, wobei mittels der Nutmutter das erste Teil mit dem zweiten Teil verschraubbar ist. Das erste Teil kann mit einem Außengewinde versehen sein und das zweite Teil mit einem an einer Nutmutter angeordneten Innengewinde. Die Nutmutter kann um die Längsachse drehbar an dem zweiten Teil angeordnet sein und mittels des Hakenschlüssels gedreht werden.

Zum Verschrauben der Teile der Isolationshülse miteinander wird die Nutmutter auf das Außengewinde geschoben und verschraubt. Um beim Verschrauben ein ausreichend hohes Anzugsmoment zu erreichen, können die letzen Umdrehungen mittels des Hakenschlüssels ausgeführt werden. Die Nutmutter kann mittels eines O-Rings drehbar in dem Teil gelagert sein, so dass verhindert wird, dass Feuchtigkeit über die Nutmutter in das Innere der Isolationshülse gelangt.

Gemäß einem vorteilhaften Ausführungsbeispiel wird vorgeschlagen, dass die Kabel Teil eines Energieleitungsstrangs einer Windkraftanlage sind. Insbesondere eignet sich das elektrische Verbindungssystem beim Verbinden von Kabeln über Sektionsgrenzen hinweg. Auch eignet sich das elektrische Verbindungssystem zum Vorkonfektionieren von in den jeweiligen Sektionen angeordneten Kabeln.

Nachfolgend wird der Gegenstand anhand einer ein Ausführungsbeispiel zeigenden Zeichnung näher erläutert. In der Zeichnung zeigen:
- Fig. 1: ein Windkraftrad mit gegenständlichen Verbindungen;
- Fig. 2: ein Kabelende mit einer Aufnahme;
- Fig. 3: ein Kabelende mit einem Konus;
- Fig. 4: eine Verbindung zwischen zwei Kabelenden.

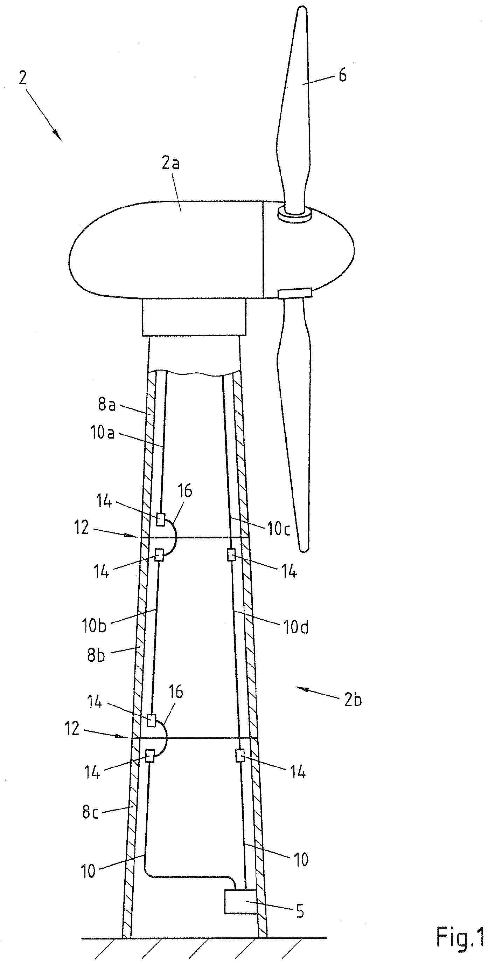

Fig. 1 zeigt eine Windkraftanlage 2 mit einer Gondel 2a und einem Windrad 6. Die Gondel 2a ist drehbar auf einem aus Sektionen 8a, 8b, 8c gebildeten Turm 2b gelagert. In jeder Sektion 8a-c sind Kabelstränge 10 angeordnet, über die die elektrische Energie von dem in der Gondel 2a angeordneten Generator (nicht gezeigt) zum dem im Sockel des Turms 2 angeordneten Umrichter 5 geleitet wird.

Die Kabelstränge 10 sind beispielhaft dargestellt. So ist in der Sektion 8a beispielsweise ein Kabelstrang 10a und ein Kabelstrang 10c angeordnet. Pro Phase können mehrere Kabelstränge 10 vorgesehen sein, so dass es durchaus vorkommen kann, dass in einer Sektion 8a pro Phase jeweils drei Kabelstränge 10a vorgesehen sein können. Auch in einer Sektion 8b sind die jeweiligen Kabel 10b, 10d vorgesehen. In der Sektion 8c sind weitere Kabelstränge 10 vorgesehen.

Für die Montage einer Windkraftanlage 2 werden die Sektionen 8 vorkonfektioniert mit Kabeln 10 geliefert. Die Kabel 10 sind in den Sektionen 8 bereits zu Beginn der Montage enthalten und müssen an den Sektionsgrenzen 12 elektrisch und mechanisch miteinander verbunden werden. Die Verbindung der Kabel 10 miteinander wird über die Verbindungssysteme 14 realisiert, wie sie nachfolgend noch näher beschrieben werden.

Einerseits ist es möglich, dass vor der Sektionsgrenze 12 die Kabel 10a, 10b abgelängt sind und jeweils mit einem Verbindungsstück verbunden sind. Ein Überbrückungskabel 16 kann die Kabel 10a, 10b über die Sektionsgrenze 12 hinweg verbinden. Das Überbrückungskabel 16 kann zu den jeweils an den Kabelenden angeordneten Verbindungsstücken komplementäre Verbindungsstücke aufweist.

Andererseits ist es möglich, dass ein erstes Kabel 10c ein erstes Verbindungsstück aufweist und ein zweites Kabel 10d ein hierzu komplementäres zweites Verbindungsstück. Die Kabel 10c, 10d können so konfektioniert sein, dass sie über die Sektionsgrenze 12 hinaus ragen. Bei der Montage kann das Verbindungssystem 14 an der Sektionsgrenze 12 zusammengesteckt werden, so dass die Kabel 10c und 10d unmittelbar mechanisch und elektrisch miteinander verbunden werden.

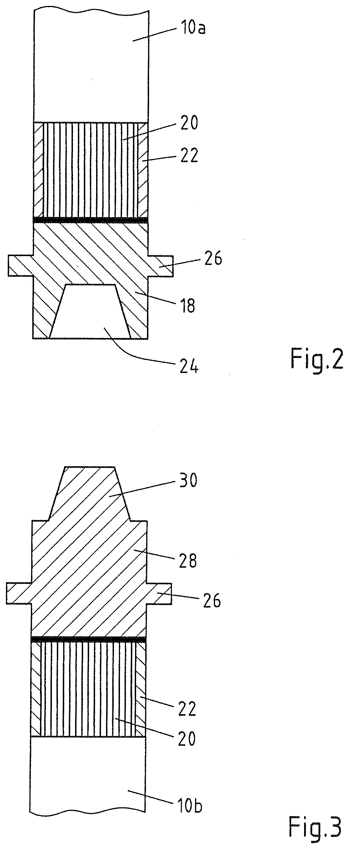

Die Verbindungssysteme 14 kann aus zwei Verbindungsstücken, die komplementär zueinander geformt sind, gebildet sein. Ein erstes Verbindungsstück 18 ist in Fig. 2 dargestellt.

In der Fig. 2 ist ein Kabelende eines Kabels 10a zu erkennen, welches ein abisoliertes Ende 20 aufweist. Um das abisolierte Ende 20 ist eine Hülse 22 gelegt. Das Kabel 10a ist vorzugsweise aus Aluminiumlitzen oder -drähten gebildet, welche durch die ebenfalls aus Aluminium gebildete Hülse 22 verpresst werden. Hierzu kann die Hülse 22 auf die Litzen aufgepresst werden. Anschließend kann die Hülse 22 zusammen mit den Litzen 20 stirnseitig abgeschliffen, abgefräst oder abgeschnitten werden. Die so gebildete Stirnseite kann dann im Anschluss mit der Stirnseite des Verbindungsstücks 18 mittels Rotationsreibschweißen stoffschlüssig verbunden werden.

Das Verbindungsstück 18 ist vorzugsweise aus Aluminium gebildet. Die Hülse 22 als auch das Verbindungsstück 18 können unternickelt und verzinnt sein. Beim Verschweißen des Verbindungsstücks 18 mit der Hülse 22 und den freien Enden der Litzen 20 werden die Oberflächenbeschichtungen aufgebrochen. Ein Aluminiumoxid, welches sich gegebenenfalls auf den Oberflächen gebildet haben kann, wird ebenfalls beim Schweißen aufgebrochen. Es entsteht eine sortenreine Verbindung zwischen den Litzen 20 und dem Verbindungsstück 18.

Wie zu erkennen ist, weist das Verbindungsstück 18 eine Aufnahme 24 auf, die konisch sich verjüngend gebildet ist. Ferner weist das Verbindungsstück 18 einen umlaufenden Kragen 26 auf.

Fig. 3 zeigt ein zweites Verbindungsstück 28. Das zweite Verbindungsstück 28 ist entsprechend der obigen Beschreibung mit einer Hülse 22 und den Litzen 20 des Kabels 10b verbunden. Zu erkennen ist, dass das zweite Verbindungsstück 28 einen Konus 30 aufweist, der komplementär zu der Aufnahme 24 ist. Der Neigungswinkel des Konus 30 als auch der Aufnahme 24 ist derart, dass der Konus 30 in Selbsthemmung in der Aufnahme 24 gehalten werden kann.

Das Verbindungsstück 28 kann wie das Verbindungsstück 18 unternickelt und verzinnt sein und aus Aluminium gebildet sein. Ferner weist das Verbindungsstück 28 einen umlaufenden Kragen 26 auf.

Für die Montage der Kabel 10a, 10b miteinander werden die Verbindungsstücke 28 und 18 ineinander geschoben. Hierbei tritt eine Selbsthemmung auf, derart, dass das Verbindungsstück 28 in den Verbindungsstück 18 gehalten wird. Eine durch die Kabel 10a, 10b ausgeübte Zugkraft, die durch das Eigengewicht der Kabel entsteht, kann durch diese Haftreibung aufgenommen werden. Dadurch wird verhindert, dass die Verbindungsstücke 18, 28, nachdem sie zusammengesteckt worden sind, sich selbstständig voneinander lösen.

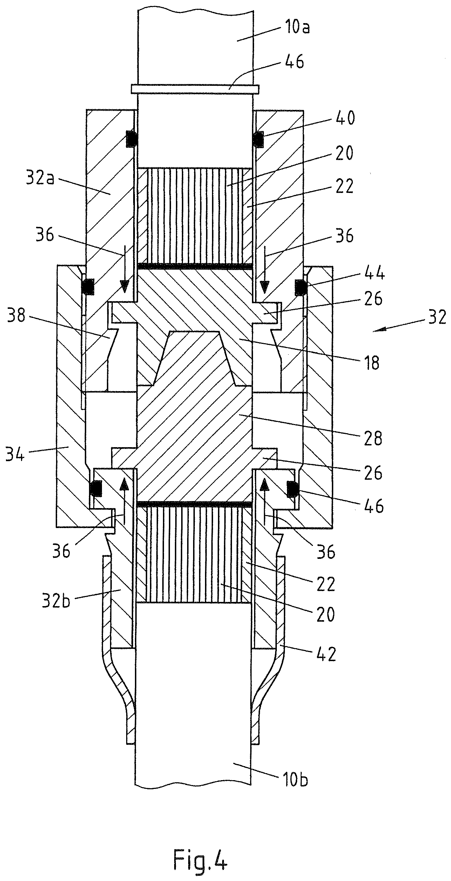

Um die Verbindungsfestigkeit zu erhöhen, wird eine Isolationshülse 32 über die Verbindungsstücke 18, 28 geschoben, wie dies in Fig. 4 dargestellt ist.

Fig. 4 zeigt die beiden Kabel 10a, 10b mit den jeweiligen Verbindungsstücken 18, 28. Die Verbindungsstücke 18, 28 sind zusammengesteckt, so dass sich eine mechanische und elektrisch leitende Verbindung zwischen den Kabeln 10a, 10b bildet.

Um diese Verbindung sicher zu machen, ist die Isolationshülse 32 vorgesehen. Die Isolationshülse 32 ist aus zwei Teilen 32a, 32b gebildet, wobei das Teil 32b nach eine Nutmutter 34 aufweist. Das Teil 32a kann beispielsweise auf das Kabel 10a aufgeschoben werden, bevor das Verbindungsstück 18 an dem Kabelende des Kabels 10a verschweißt wird. Das Teil 32b kann gleichfalls über das Kabel 10b geschoben werden, bevor das Verbindungsstück 28 an dem Kabel 10b befestigt wird. Somit können die Kabel 10a, 10b konfektioniert mit den Teilen 32a, 32b, 34 und den Verbindungsstücken 18, 26 in den jeweiligen Sektionen 8a, 8b der Windkraftanlage 2 angeordnet sein.

Der Monteur muss bei der Montage der Kabel 10 zunächst lediglich die Verbindungsstücke 18, 28 zusammenschieben und anschließend die Teile 32a, 32b, 34 der Isolationshülse 32 miteinander verbinden. Hierzu schiebt der Monteur die Teile 32a, 32b übereinander und verschraubt die Teile 32a, 32b miteinander. Hierzu ist an dem Teil 32b die um die Längsachse drehbar um das Teil 32b angeordnete Nutmutter 34 vorgesehen. Die Nutmutter 34 hat ein Innengewinde und lässt sich mit einem Hakenschlüssel drehen. Die Nutmutter 34 ist über einen O-Ring 46 abgedichtet.

Das Teil 32a weist an seinem einen Ende ein Außengewinde auf, welches komplementär zu dem Innengewinde der Nutmutter 34 ist. Für die Montage wird die Nutmutter 34 über das Außengewinde des Teils 32 gelegt und mit diesem verschraubt. Hierbei ziehen sich die Teile 32a, 32b zusammen, bis eine Kraft 36 auf die Verbindungsstücke 18, 28 wirkt. Die Kraft 36 wird auf die Verbindungsstücke 18, 28 durch die innen liegenden Ringschultern der Teile 32a, 32b auf die umlaufenden Kragen 26 ausgeübt.

Wie zu erkennen ist, liegen die Ringschultern der Teile 32a, 32b unmittelbar an den umlaufenden Kragen 26 der Verbindungsstücke 18, 28 an. Hierdurch wirkt die Kraft 36 auf die Verbindung zwischen den Verbindungsstücken 18, 28.

Ferner können innenliegende Nasen 38 in zumindest einem Teil der Isolationshülse 32 vorgesehen sein. Die Nasen 38 können so gestaltet sein, dass sie beim Verbinden der Teile 32a, 32b miteinander über einen Kragen 26 geführt werden können und danach einen Kragen 26 hintergreifen. Sobald die Teile 32a, 32b auseinandergedreht werden, beispielsweise durch Lösen der Nutmutter 34 von dem Teil 32a, üben die hintergreifenden Nasen 38 eine Zugkraft entgegen der Kraft 32 auf den Kragen 26 aus. Hierdurch wird erreicht, dass die Haltekraft aufgrund der Selbsthemmung zwischen den Verbindungsstücken 18, 28 überwunden wird, und die Verbindungsstücke 18, 28 sich voneinander lösen.

Um zu verhindern, dass Feuchtigkeit an die Verbindungsstelle zwischen den Verbindungsstücken 18, 28 gelangt, kann beispielsweise ein O-Ring 40 vorgesehen sein, der die Innenwand der Isolationshülse 32 gegenüber der Isolation des Kabels 10a abdichtet. Auch ist es möglich, dass ein Schrumpfschlauch 42 über einen Teil der Isolationshülse 32 und ein Teil des Kabels lab geschoben wird und hierauf aufgeschrumpft wird. Auch hierdurch wird verhindert, dass Feuchtigkeit in den Bereich der Verbindung zwischen den Verbindungsstücke 18, 28 gelangt. Der Schrumpfschlauch 42 kann auch über die gesamte Isolationshülse 32 geschoben sein.

Auch ist es möglich, dass im Bereich der Verbindung zwischen Nutmutter 34 und dem Außengewinde des Teils 32a ein weiterer O-Ring 44 vorgesehen ist. Dieser O-Ring 44 verhindert, dass Feuchtigkeit über das Gewinde in den Bereich der Verbindungsstelle zwischen den Verbindungsstücken 18, 28 gelangt.

Schließlich ist es auch möglich, dass alternativ oder zusätzlich zu den Nasen 38 ein Befestigungsring 46 (Seegerring) an der Isolation des Kabels 10a befestigt ist. Dieser Ring 46 bewirkt, dass sich beim Auseinanderschieben der Teile 32a, 32b die Isolationshülse gegen den Befestigungsring 46 drückt und eine Zugkraft auf die Verbindung zwischen den Verbindungsstücken 18, 28 ausübt, so dass deren Selbsthemmung überwunden wird.

Mit Hilfe des gezeigten Verbindungssystems ist es möglich, aus Aluminium geformte Kabel in Windkraftanlagen in besonders einfacher Weise miteinander zu verbinden. Der Montageaufwand wird erheblich verringert. Der Übergangswiderstand zwischen den Kabeln wird klein gehalten, so dass elektrische Verluste minimiert werden. Zur Wartung können die Kabel in besonders einfacher Weise voneinander getrennt werden und eine Dauerhaftigkeit der Verbindung ist gewährleistet.

## Patentansprüche

1. Elektrisches Verbindungssystem einer Energiegewinnungseinrichtung mit
- einem an einem Ende eines ersten Kabels (10a, 16) angeordneten ersten Verbindungsstück (18), und einem an einem Ende eines zweiten Kabels (10b) oder einem zweiten Ende des ersten Kabels (10a, 16) angeordneten, zu dem ersten Verbindungsstück (18) komplementären zweiten Verbindungsstück (28), wobei dass das erste Verbindungsstück (18) eine Aufnahme (24) für das zweite Verbindungsstück (28) aufweist, und dass das zweite Verbindungsstück (28) einen selbsthemmend in der Aufnahme (24) anzuordnenden Bolzen (30) aufweist, wobei eine zweiteilige Isolationshülse (32) die Verbindungsstücke (18, 28) umgibt und eines der Teile (32a, 32 b) eine Nutmutter (34) aufweist, wobei mittels der Nutmutter (34) das erste Teil (32a) der Isolationshülse (32) mit dem zweiten Teil (32b) der Isolationshülse (32) verschraubbar ist,
**dadurch gekennzeichnet,**
- **dass** die Nutmutter zur Aufnahme eines Hakenschlüssels gebildet ist.

2. Elektrisches Verbindungssystem nach Anspruch 1, **dadurch gekennzeichnet, dass** das zweite Verbindungsstück (28) ein in der Aufnahme (24) selbstgehemmter Konus (30) ist,
wobei insbesondere die Aufnahme (24) in Einschubrichtung des Konus (30) sich verjüngt.

3. Elektrisches Verbindungssystem nach Anspruch 1 oder 2, **dadurch gekennzeichnet, dass** das erste und das zweite Verbindungsstück (18, 28) aus Aluminium gebildet sind und insbesondere vernickelt und/oder verzinnt sind.

4. Elektrisches Verbindungssystem nach einem der Ansprüche 1 bis 3, **dadurch gekennzeichnet, dass** ein abisoliertes Kabelende in einer Hülse (22) angeordnet ist und dass ein stirnseitiges Ende der Hülse (22) und/oder des Kabelende mit dem Verbindungsstück (18, 28) verschweißt ist, wobei die Hülse (22) insbesondere aus Aluminium gebildet ist.

5. Elektrisches Verbindungssystem nach einem der Ansprüche 1 bis 4, **dadurch gekennzeichnet, dass** das Kabel (10) aus Aluminium, insbesondere aus AL99,5, gebildet ist.

6. Elektrisches Verbindungssystem nach Anspruch 1, **dadurch gekennzeichnet, dass** ein erster Teil (32a) der Isolationshülse (32) an dem ersten Kabel (10a) angeordnet ist und ein zweiter Teil (32b, 34) der Isolationshülse (32) an dem zweiten Kabel (10b) angeordnet ist und wobei die Teile (32, 34) verliersicher miteinander mechanisch verbindbar sind, derart, dass im verbundenen Zustand eine durch die Teile (32, 34) auf die Verbindungsstücke (18, 28) ausgeübte Kraft die Verbindungsstücke (18, 28) axial aufeinander zu drückt.

7. Elektrisches Verbindungssystem nach einem der Ansprüche 1 bis 6, **dadurch gekennzeichnet, dass** die Kabel (10) Teil eines Energieleitungsstrang einer Windkraftanlage (2) sind.

## Claims

1. Electrical connection system of an
- energy generation device having a first connector (18) disposed at one end of a first cable (10a, 16), and
- a second connector (28) disposed at one end of a second cable (10b) or a second end of the first cable (10a, 16) and that is complementary to the first connector (18),
wherein
- the first connector (18) has a receptacle (24) for the second connector (28) and
- the second connector (28) has a bolt (30) to be disposed in the receptacle (24) in a self-locking manner,
wherein
- a two-part insulation sleeve (32) surrounds the connectors (18, 28), and
- at least one part (32a, 32b) comprises a locknut (34) wherein by means of the locknut (34) the first part (32a) of the insulation sleeve (32) can be screwed together with the second part (32b) of the insulation sleeve,
**characterised in that**
the locknut is arranged to accommodate a hook wrench.

2. Electrical connection system according to claim 1, **characterised in that** the second connector (28) is a cone (30) that is self-locking in the receptacle (24), wherein in particular the receptacle (24) tapers in the insertion direction of the cone (30).

3. Electrical connection system according to claim 1 or 2, **characterised in that** the first and the second connectors (18, 28) are made of aluminium and in particular are nickel-plated and/or tin-plated.

4. Electrical connection system according to any one of claims 1 to 3, **characterised in that** a cable end stripped of insulation is disposed in a sleeve (22) and **in that** a front end of the sleeve (22) and/or of the cable end is welded to the connector (18, 28), wherein the sleeve (22) is in particular made from aluminium.

5. Electrical connection system according to any one of claims 1 to 4, **characterised in that** the cable (10) is made from aluminium, in particular from AL99.5.

6. Electrical connection system according to claim 1, **characterised in that** the first part (32a) of the insulation sleeve (32) is disposed on the first cable (10a) and a second part (32b, 34) of the insulation sleeve is disposed on the second cable (10b) and wherein the parts (32, 34) can be mechanically and captively joined together, such that in the connected state a force exerted by the parts (32, 34) on the connectors (18, 28) pushes the connectors (18, 28) axially towards each other.

7. Electrical connection system according to any one of claims 1 to 6, **characterised in that** the cables (10) are part of an energy lead harness of a wind power system (2).

## Revendications

1. Système de connexion électrique d'un dispositif de production d'énergie, ledit système de connexion électrique comprenant
- une première pièce de connexion (18) disposée au niveau d'une extrémité d'un premier câble (10a, 16) et une seconde pièce de connexion (28) complémentaire de la première pièce de connexion (18) et disposée au niveau d'une extrémité d'un second câble (10b) ou au niveau d'une seconde extrémité du premier câble (10a, 16), où la première pièce de connexion (18) présente un logement (24) pour la seconde pièce de connexion (28) et où la seconde pièce de connexion (28) présente un boulon (30) devant être disposé de manière autobloquante dans le logement (24), où une douille isolante (32) en deux parties entoure les pièces de connexion (18, 28), et l'une des parties (32a, 32b) présente un écrou à encoches (34) où, au moyen de l'écrou à encoches (34), la première partie (32a) de la douille isolante (32) peut être vissée avec la seconde partie (32b) de la douille isolante (32),
**caractérisé en ce qu'**un écrou à encoches servant au logement d'une clé à ergot.

2. Système de connexion électrique selon la revendication 1, **caractérisé en ce que** la seconde pièce de connexion (28) est un cône (30) autobloqué dans le logement (24), où en particulier le logement (24) se réduit de façon conique dans la direction d'introduction du cône (30).

3. Système de connexion électrique selon la revendication 1 ou 2, **caractérisé en ce que** la première et la seconde pièce de connexion (18, 28) sont formées en aluminium et sont en particulier nickelées et/ou étamées.

4. Système de connexion électrique selon l'une quelconque des revendications 1 à 3, **caractérisé en ce qu'**une extrémité de câble isolée est disposée dans une douille (22), et **en ce qu'**une extrémité frontale de la douille (22) et/ou de l'extrémité du câble est soudée avec la pièce de connexion (18, 28), où la douille (22) est formée en particulier en aluminium.

5. Système de connexion électrique selon l'une quelconque des revendications 1 à 4, **caractérisé en ce que** le câble (10) est formé en aluminium, en particulier en aluminium 99.5.

6. Système de connexion électrique selon la revendication 1, **caractérisé en ce qu'**une première partie (32a) de la douille isolante (32) est disposée sur le premier câble (10a) et une seconde partie (32b, 34) de la douille isolante (32) est disposée sur le second câble (10b), et où les parties (32, 34) sont assemblables mécaniquement l'une avec l'autre, de manière imperdable, de telle sorte, qu'à l'état assemblé, une force exercée par les parties (32, 34), sur les pièces de connexion (18, 28), comprime les pièces de connexion (18, 28) l'une contre l'autre dans le sens axial.

7. Système de connexion électrique selon l'une quelconque des revendications 1 à 6, **caractérisé en ce que** les câbles (10) font partie d'un circuit de transport d'énergie d'une éolienne (2).
